(19) Europäisches Patentamt

European Patent Office

Office européen des brevets

(11) Veröffentlichungsnummer: **0 156 315 B1**

# (12) EUROPÄISCHE PATENTSCHRIFT

(45) Veröffentlichungstag der Patentschrift: **05.06.91**

(21) Anmeldenummer: **85103331.6**

(22) Anmeldetag: **21.03.85**

(51) Int. Cl.⁵ **H04L 1/24**, H04B 3/23

(54) **Schaltungsanordnung zum Prüfen der Funktionsfähigkeit einer Datenübertragunseinrichtung.**

(30) Priorität: **30.03.84 DE 3411903**

(43) Veröffentlichungstag der Anmeldung:
**02.10.85 Patentblatt 85/40**

(45) Bekanntmachung des Hinweises auf die
Patenterteilung:
**05.06.91 Patentblatt 91/23**

(84) Benannte Vertragsstaaten:
**AT BE CH DE FR GB IT LI NL SE**

(56) Entgegenhaltungen:
**EP-A- 0 014 505**

(73) Patentinhaber: **Siemens Aktiengesellschaft**
**Wittelsbacherplatz 2**
**W-8000 München 2(DE)**

(72) Erfinder: **Haass, Adolf**
**Eichelhäherstrasse 54**
**W-8000 München 60(DE)**

## Beschreibung

Die Erfindung betrifft eine Schaltungsanordnung der im Oberbegriff des Patentanspruchs beschriebenen Art.

Durch CA-A-1 144 999 (EP-A-D 014 505) ist eine Schaltungsanordnung mit diesen Merkmalen bekannt. Das Funktionsprinzip der dort offenbarten Prüfschaltungen besteht darin, daß im Empfangszweig eines Modems, d. h. in dem zwischen dem empfangsseitigen Ausgang der Gabelschaltung und dem Eingang des Modems verlaufenden Signalzweig im Prüfzustand eine Überlagerung zwischen dem echokompensierten Signal und dem am Ausgang der Gabelschaltung auftretenden Schleifensignal erfolgt. Falls der Echokompensator nicht korrekt arbeitet, überschreitet das von ihm abgegebene Signal einen vorbestimmten Schwellenwert, woraufhin am Eingang des Modems ein Signal erzeugt wird, das von der Testsequenz abweicht und ein Indiz für eine Fehlfunktion darstellt. In dem erwähnten Signalzweig kann eine Verzögerungsschaltung vorgesehen sein, deren Verzögerungsschaltung vorgesehen sein, deren Verzögerungszeit der halben Dauer eines Datenbits entspricht. Falls der Echokompensator nicht korrekt arbeitet, entsteht deshalb am Ausgang des erwähnten Addierers ein Signal, dessen Zustandsänderungen wegen der Verzögerung in der Mitte der einzelnen Bits der Testsequenz auftreten, so daß am Eingang des Modems eine von der Testsequenz abweichende Signalfolge empfangen wird.

Der Erfindung liegt die Aufgabe zugrunde, eine Schaltungsanordnung der gattungsgemäßen Art so auszubilden, daß sich einerseits ein sehr einfacher Schaltungsaufbau ergibt und andererseits die gesamte Datenübertragungseinrichtung einschließlich ihrer Echokompensationsschaltung auf einwandfreie Funktion überprüft werden kann. Die Lösung dieser Aufgabe ergibt sich aus dem Patentanspruch.

Die erfindungsgemäße Schaltungsanordnung läßt sich mit einem vergleichsweise geringen Aufwand realisieren und ermöglicht eine vollständige Prüfung der Datenübertragungseinrichtung einschließlich ihrer Echokompensationsschaltung. Wenn die Echokompensationsschaltung einwandfrei arbeitet, kompensiert sie im Prüfzustand nicht sämtliche über die Datensignal-Abgabeleitung zugeführten Datensignale, sondern nur diejenigen, die in ihrem Arbeitsbereich liegen. Die Größe dieses Arbeitsbereichs ist abhängig von der Anzahl der verwendeten Koeffizienten und von der Korrelationslänge der Datensignale, die in dessen vom Codier- bzw. Modulationsverfahren abhängig ist, welches benutzt ist. Auf diese Weise kann z.B. von einem Datenendgerät aus, das sowohl mit der Datensignal-Abgabeleitung als auch mit der Datensignal-Aufnahmeleitung verbunden ist, auf einfache Weise die erwähnte Prüfung durchgeführt werden.

Anhand von Zeichnungen wird die Erfindung nachstehend beispielsweise näher erläutert.

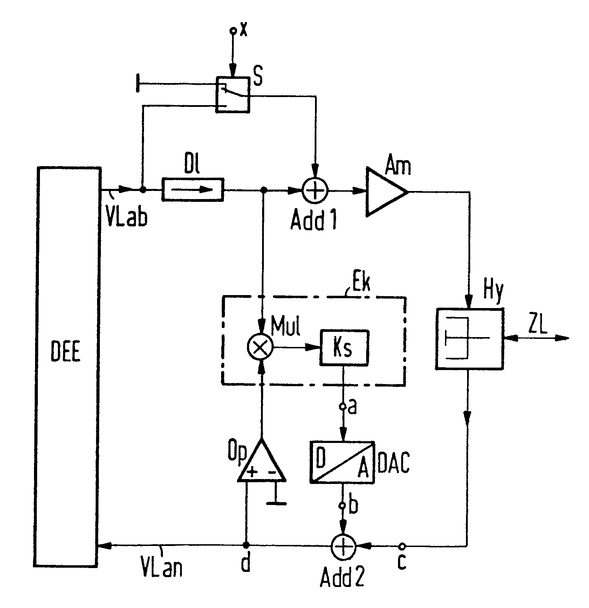

In der Zeichnung ist eine Datenübertragungseinrichtung dargestellt, die eine Datensignal-Abgabeleitung VLab und eine Datensignal-Aufnahmeleitung VLan aufweist. Diese beiden, insgesamt zu einer Vierdrahtleitung gehörenden Datensignal-Leitungen sind über eine Gabelschaltung Hy mit einer eine Zweidrahtleitung darstellenden Übertragungsleitung ZL verbunden, über die Datensignale im Vollduplexbetrieb übertragen werden können. Mit ihren beiden Datensignal-Leitungen ist die erwähnte Datenübertragungseinrichtung im vorliegenden Fall an einem Datenendgerät DEE angeschlossen, welches Datensignale sowohl abzugeben als auch aufzunehmen vermag.

In der Datensignal-Abgabeleitung VLab liegt die Reihenschaltung einer Verzögerungseinrichtung DI, eines Addierers Add1 und eines Verstärkers Am. Über einen Umschalter S ist ein weiterer Eingang des Addierers Add1 entweder direkt mit Erd- bzw. Massepotential (Null-Potential) oder aber mit der Datensignal-Abgabeleitung VLab verbunden. Die Schalterstellung des Schalters S hängt davon ab, ob dem mit einem Steueranschluß x verbundenen Einstelleingang dieses Schalters ein Binärsignal "0" oder "1" zugeführt wird. Der Ausgang des erwähnten Verstärkers Am ist direkt mit einem Eingang der Gabelschaltung Hy verbunden.

Mit dem Ausgang der Verzögerungseinrichtung DI ist der Eingang einer Echokompensationsschaltung Ek verbunden. Ausgangsseitig ist die Echokompensationsschaltung Ek mit einem Eingang eines weiteren Addierers Add2 verbunden, der mit einem weiteren Eingang und mit seinem Ausgang in der erwähnten Datensignal-Aufnahmeleitung VLan liegt. In die Verbindung zwischen dem genannten einen Eingang des Addierers Add2 und der Ausgangsseite der Echokompensationsschaltung Ek ist im vorliegenden Fall ein Digital-Analog-Wandler DAC eingefügt. Der Einsatz dieses Wandlers ergibt sich im vorliegenden Fall mit Rücksicht darauf, daß die Echokompensationsschaltung Ek ausgangsseitig digitale Signale abgibt. Derartige Echokompensationsschaltungen sind prinzipiell bekannt (beispielsweise im Zusammenhang mit den eingangs betrachteten bekannten Datenübertragungseinrichtungen).

Die Echokompensationsschaltung Ek weist ein Koeffizientennetzwerk Ks auf, welches vom Ausgang eines Multiplizierers Mul ansteuerbar ist. Entsprechend den verschiedenen Ausgangssignalen des Multiplizierers Mul werden unterschiedliche Koeffizienten wirksam gesteuert, die für die Echokompensation in dem Addierer Add2 herangezogen werden. Der Multiplizierer Mul der Echokompensationsschaltung Ek ist zum einen am Ausgang eines als Komparator dienenden Operationsverstärkers Op angeschlossen. Dieser Komparator Op ist mit seinem nichtinvertierenden Eingang + am Ausgang des Addierers Add2 angeschlossen, und mit seinem invertierenden Eingang - liegt der betreffende Operationsverstärker Op an Erd- bzw. Massepotential. Mit seinem anderen Eingang ist der erwähnte Multiplizierer Mul direkt am Ausgang der oben erwähnten Verzögerungseinrichtung Dl angeschlossen.

Nachdem zuvor der Aufbau der in der Zeichnung dargestellten Schaltungsanordnung erläutert worden ist, sei nunmehr die Arbeitsweise dieser Schaltungsanordnung näher betrachtet. Zunächst sei davon ausgegangen, daß die betreffende Schaltungsanordnung für eine normale Datensignalübertragung eingesetzt werden soll. In diesem Falle ist der Schalter S1 in der in der Zeichnung gerade dargestellten Schalterstellung eingestellt. Dies bedeutet, daß dem Addierer Add1 eingangsseitig lediglich das durch die Verzögerungseinrichtung Dl verzögerte Signal zugeführt wird. Dieses verzögerte Datensignal wird somit sowohl der Echokompensationsschaltung Ek als auch dem Verstärker Am und damit der Gabelschaltung Hy zugeführt. Die in diesem Falle über die Gabelschaltung Hy auftretenden Übersprech- bzw. Echosignale werden durch entsprechende Kompensationssignale kompensiert, die gerade die Echokompensationsschaltung Ek über den Digital-Analog-Wandler DAC abgibt. Dabei ist davon auszugehen, daß zwischen dem Zeitpunkt des Auftretens von Datensignalen am Eingang der Echokompensationsschaltung Ek und damit dem Zeitpunkt der Abgabe von Kompensationssignalen durch die Echokompensationsschaltung Ek einerseits und den zu kompensierenden Signalanteilen auf der Datensignal-Aufnahmeleitung VLan andererseits eine bestimmte Korrelationszeit vorhanden ist; mit anderen Worten ausgedrückt heißt dies, daß die Echokompensationsschaltung Ek zur Kompensation des Übersprechsignals auf jeden ihr eingangsseitig zugeführten Datenimpuls hin eine Impulsantwort bzw. ein Impulsantwortsignal bestimmter Länge (zeitlicher Dauer) erzeugt.

Um nun die Funktionsfähigkeit der in der Zeichnung dargestellten Schaltungsanordnung prüfen zu können, also von dem Datenendgerät DEE aus gewissermaßen eine Prüfschleife einzulegen, die lediglich die in der Zeichnung dargestellte Schaltungsanordnung umfaßt, wird der Schalter SI in seine in der Zeichnung nicht dargestellte Schalterstellung eingestellt. Zu diesem Zweck wird dem Steueranschluß x ein entsprechendes Einstellsignal zugeführt. Damit wird ein von dem Datenendgerät DEE abgegebenes Datensignal dem Addierer Add1 zum einen unverzögert (über den Schalter S) und zum anderen über die Verzögerungseinrichtung Dl verzögert zugeführt. Das Ausgangssignal des Addierers wird über den Verstärker Am der Gabelschaltung Hy zugeführt. Das verzögerte, jedoch nicht verstärkte Datensignal, welches am Ausgang der Verzögerungseinrichtung Dl auftritt, wird dabei zur Einstellung der Echokompensationsschaltung Ek herangezogen.

Bezüglich der zuvor erwähnten Verzögerungseinrichtung Dl ist anzumerken, daß diese die ihr eingangsseitig zugeführten Signale um eine festgelegte Zeitspanne T verzögert, welche mindestens so groß ist, daß die Datensignale am Eingang und am Ausgang der Verzögerungseinrichtung Dl nicht mehr korreliert sind. Diese Zeit ist abhängig vom Codier- bzw. Modulationsverfahren, welches angewandt ist. Die Wahl gerade einer solchen Verzögerungszeit wirkt sich beim normalen Datensignalübertragungsbetrieb auf die Echokompensation nicht nachteilig aus, da die betreffenden Signale gleichzeitig dem Eingang der Gabelschaltung Hy und dem Eingang der Echokompensationsschaltung Ek zugeführt werden. Im Prüfbetrieb, in welchem der Schalter S sich in seiner in der Zeichnung nicht dargestellten Schalterstellung befindet, wird die Echokompensationsschaltung Ek so eingestellt werden, daß sie eine Kompensation bezüglich der ihr vom Ausgang der Verzögerungseinrichtung Dl zugeführten Datensignalelemente vornimmt. Dies bedeutet aber, daß eine Kompensation bezüglich der der Gabelschaltung Hy unverzögert zugeführten Datensignale nicht erfolgt. Voraussetzung für ein einwandfreies Funktionieren ist in diesem Zusammenhang, daß die Verzögerungszeit der Verzögerungseinrichtung Dl der oben angegebenen Bedingung genügt.

Durch die vorstehend erläuterte Arbeitsweise erhält das in der Zeichnung dargestellte Datenendgerät DEE Datensignalelemente zurück, die den Datensignalelementen entsprechen, welche zuvor von dem betreffenden Datenendgerät DEE abgegeben worden ist. Sollten nicht dieselben Datensignalelemente an das Datenendgerät DEE zurückgelangen, die gesendet wurden, während sich die betrachtete Schaltungsanordnung im Prüfbetrieb befindet, so ist in der die Verzögerungseinrichtung Dl, den Addierer Add1, den Verstärker Am, die Echokompensationsschaltung Ek, den Digital-Analog-Wandler DAC und den Addierer Add2 umfassenden Prüfschleife ein Defekt vorhanden.

Abschließend sei noch darauf hingewiesen, daß die Schaltungsanordnung gemäß der Erfindung auch in anderer Weise realisiert sein könnte als dies in der Zeichnung dargestellt ist. So könnte der Addierer Add1 durchaus auch an den Stellen vorgesehen sein, an denen die Schaltungspunkte a,b,c und d angegeben sind. In diesen Fällen würde den an den betreffenden Schaltungspunkten auftretenden Signalen jeweils ein zusätzliches Signal über den Schalter S zugeführt werden. Überdies ist es möglich, die Verzögerungseinrichtung DI in die Verbindung einzufügen, die über den erwähnten Schalter S zu dem einen Eingang des Addierers Add1 hin verläuft. Diese Lösung trifft für sämtliche Einsatzfälle des Addierers Add1 zu, also sowohl bei der in der Zeichnung konkret gezeigten Schaltungsanordnung als auch in den Fällen, daß der Addierer Add1 an den Stellen in die jeweilige Verbindungsleitung eingefügt ist, die mit a,b,c, bzw. d markiert sind. In diesen Fällen ist aber die durch die betreffende Verzögerungseinrichtung eingeführte Verzögerungszeit größer zu wählen als die Summe der Zeit, die zu einer Korrelation von unverzögerten und verzögerten Datensignalen in der Echokompensationsschaltung führt, und der Dauer der von der Echokompensationsschaltung abgegebenen längstmöglichen Impulsantwortsignale.

## Ansprüche

1. Schaltungsanordnung zum Prüfen der Funktionsfähigkeit einer Datenübertragungseinrichtung, die über eine Datensignal-Abgabeleitung (VLab) und eine Datensignal-Aufnahmeleitung (VLan) mit einer Gabelschaltung (Hy) und über diese mit einer Übertragungsleitung (ZL) für Vollduplex-Datensignalübertragung verbunden ist,
mit einer Echokompensationsschaltung (Ek) zur Kompensation von Signalanteilen, die bei der Datensignalübertragung von der Datensignal-Abgabeleitung (VLab) auf die Datensignal-Aufnahmeleitung (VLan) gelangen, mit einem Schalter (S) zur Herbeiführung des Prüfzustands sowie mit einer in einer der Signalleitungen angeordneten Verzögerungseinrichtung (DI),
**dadurch gekennzeichnet,**
daß die Verzögerungszeit der Verzögerungseinrichtung (DI) größer ist als die Zeit, die in der Echokompensationsschaltung (Ek) zu einer Korrelation von unverzögerten und verzögerten Datensignalen führt,
daß die genannte Verzögerungseinrichtung (DI) in der Datensignal-Abgabeleitung (VLab) angeordnet ist,
daß der Echokompensationsschaltung (Ek) entweder nur die verzögerten oder nur die unverzögerten Datensignale zugeführt werden,
und daß in einem der Signalstromkreise eine Addierschaltung (Add1) angeordnet ist, die im Prüfzustand das in diesem Signalstromkreis vorhandene unverzögerte Signal und das in der Verzögerungseinrichtung verzögerte Datensignal derart zusammenfaßt,

daß sich eine zeitliche Entkopplung zwischen zwei aufeinanderfolgenden Datensignalen ergibt, die zur Folge hat, daß bei ordnungsgemäßer Funktion der Schaltungsanordnung eines der Datensignale von der Echokompensationsschaltung (Ek) nicht beeinflußt wird.

## Claims

1. Circuit for testing the correct operation of a data transmission system, which is connected via an outgoing data signal line (VLab) and an incoming data signal line (VLan) to a hybrid circuit (Hy) and via the latter to a transmission line (ZL) for full-duplex data signal transmission, comprising an echo compensation circuit (Ek) for compensating signal components which pass from the outgoing data signal line (VLab) to the incoming data signal line (VLan) during the data signal transmission,
with a switch (S) for producing the test condition and with a delay device (D1) arranged in one of the signal lines, characterised in that the delay time of the delay device (D1) is greater than the time which leads to a correlation of undelayed and delayed data signals in the echo compensation circuit (Ek), that the said delay device (D1) is arranged in the outgoing data signal line (VLab), that the echo compensation circuit (Ek) is supplied with either only the delayed or only the undelayed data signals, and that in one of the signal circuits, an adding circuit (Add1) is arranged which, in the test condition, combines the undelayed signal existing in this signal circuit and the data signal delayed in the delay device, in such a manner that a decoupling in time occurs between two successive data signals, the consequence of which is that when the circuit is correctly operating, one of the data signals is not influenced by the echo compensation circuit (Ek).

## Revendications

1. Montage pour contrôler l'aptitude au fonctionnement d'un dispositif de transmission de données, qui est raccordé, par l'intermédiaire d'une ligne (VLab) de sortie des signaux de données et d'une ligne (VLan) de réception des signaux de données, a un termineur (Hy) et, par l'intermédiaire de ce dernier, à une ligne de transmission (ZL) assurant la transmission de signaux de données en duplex total, et comportant
un circuit de compensation d'échos (Ek) servant à compenser des composantes de signaux, qui parviennent, lors de la transmission des signaux de données, depuis la ligne (VLab) de sortie des signaux de données à la ligne (VLan) de réception des signaux de données,

un interrupteur (S) servant à introduire l'état de contrôle et un dispositif de retardement (D1) disposé dans l'une des lignes de transmission de signaux, caractérisé par le fait

que le retard produit par le dispositif de retardement (D1) est supérieur à la durée, qui conduit, dans le circuit de compensation d'échos (Ek), à une corrélation de signaux de données non retardés et de signaux de données retardés,

que ledit dispositif de retardement (D1) est disposé dans la ligne (VLab) de sortie des signaux de données,

que seuls les signaux de données retardés, ou seuls les signaux de données non retardés sont envoyés au circuit de compensation d'échos (Ek), et

que dans l'un des circuits de transmission de signaux est installé un circuit additionneur (Add1), qui, dans l'état de contrôle, réunit le signal non retardé présent dans ce circuit de transmission de signaux et le signal de données retardé dans le dispositif de retardement de manière à obtenir un découplage dans le temps entre deux signaux de données successifs, qui conduit à ce que, dans le cas d'un fonctionnement correct du montage, l'un des signaux de données n'est pas influencé par le circuit de compensation d'échos (Ek).